# FASCICULE DE BREVET EUROPEEN

(11) **EP 4 140 895 B1**
(45) Date de publication et mention de la délivrance du brevet: **15.05.2024**
(21) Numéro de dépôt: 22191556.4
(22) Date de dépôt: 22.08.2022
(51) Int. Cl.: B64D 27/24, B64D 33/08

(54) **DISPOSITIF DE REFROIDISSEMENT D'UN ENSEMBLE PROPULSEUR D AÉRONEF COMPRENANT AU MOINS UN COUPLE DE VOLETS D ADMISSION ET D ÉCHAPPEMENT AINSI QU UN ACTIONNEUR CONTRÔLANT LESDITS VOLETS**
KÜHLVORRICHTUNG FÜR EIN FLUGZEUGTRIEBWERK, DAS MINDESTENS EIN PAAR EINLASS- UND AUSLASSKLAPPEN SOWIE EINEN STELLANTRIEB ZUR STEUERUNG DER KLAPPEN UMFASST
DEVICE FOR COOLING A PROPELLER ASSEMBLY FOR AN AIRCRAFT INCLUDING AT LEAST ONE PAIR OF INTAKE AND EXHAUST FLAPS AS WELL AS AN ACTUATOR CONTROLLING SAID FLAPS

(30) Priorité: 23.08.2021 FR 2108817
(43) Date de publication de la demande: 01.03.2023
(73) Titulaire: AIRBUS OPERATIONS (S.A.S.), 31060 Toulouse (FR)
(72) Inventeur: DEVASIGAMANI, Nandakumar, 31060 TOULOUSE (FR)
(74) Mandataire: Fantin, Laurent

(56) Documents cités:
- EP-A1- 3 597 540
- US-A1- 2021 036 580

## Description

La présente demande se rapporte à un dispositif de refroidissement d'un ensemble propulseur d'aéronef comprenant au moins un couple de volets d'admission et de refroidissement ainsi qu'un actionneur contrôlant lesdits volets. La présente demande se rapporte également à un ensemble propulseur d'aéronef comprenant ledit dispositif de refroidissement.

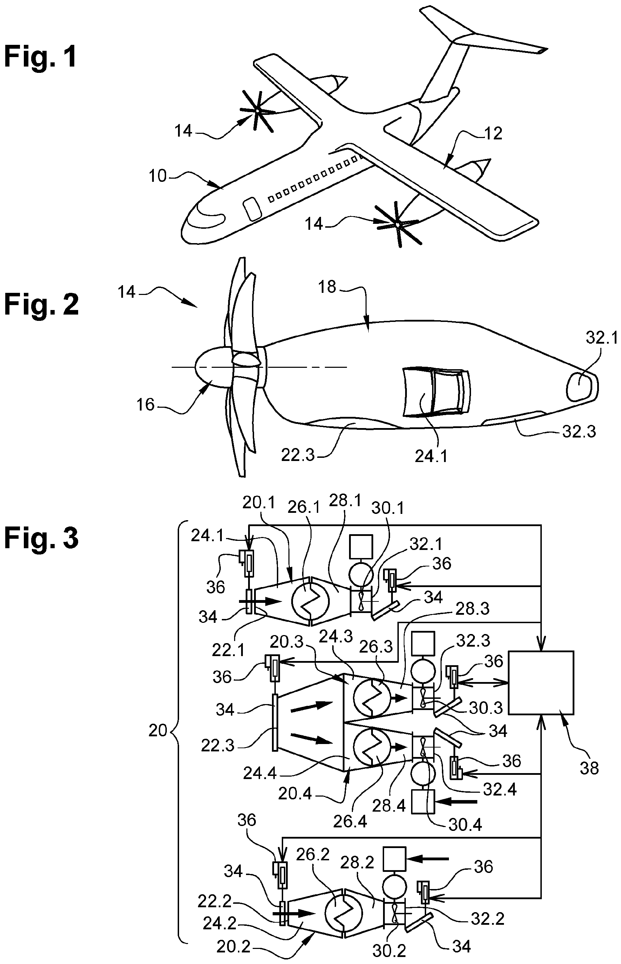

Selon un mode de réalisation visible sur la figure 1, un aéronef comprend un fuselage 10, des ailes 12 s'étendant de part et d'autre du fuselage 10 ainsi que des ensembles propulseurs électriques 14 reliés aux ailes 12.

Selon un mode de réalisation visible sur la figure 2, chaque ensemble propulseur électrique 14 comprend au moins un système d'alimentation électrique, comme un ensemble de piles à combustible par exemple, un moteur électrique alimenté par le système d'alimentation électrique, une hélice de propulsion 16 entraînée en rotation par le moteur électrique ainsi qu'une nacelle 18 logeant le système d'alimentation électrique et le moteur électrique.

Lors de son fonctionnement, le système d'alimentation électrique dégage de la chaleur qu'il convient d'évacuer. A cet effet, l'ensemble propulseur électrique 14 comprend un dispositif de refroidissement 20 comportant quatre circuits de refroidissement 20.1 à 20.4. Selon un agencement, le dispositif de refroidissement 20 comprend deux circuits de refroidissement latéraux 20.1 et 20.2 disposés de manière symétrique par rapport à un plan médian vertical de l'ensemble propulseur électrique 14 ainsi que deux circuits de refroidissement inférieurs 20.3, 20.4

Selon un mode de réalisation visible sur la figure 3, chaque circuit de refroidissement latéral 20.1, 20.2 comprend, selon le sens d'écoulement de l'air, une entrée d'air 22.1, 22.2, un conduit d'admission 24.1, 24.2, un échangeur thermique 26.1, 26.2, un conduit d'échappement 28.1, 28.2, un ventilateur 30.1, 30.2 ainsi qu'une sortie d'air 32.1, 32.2.

Les deux circuits de refroidissement inférieurs 20.3, 20.4 comprennent une entrée d'air commune 22.3, puis chacun un conduit d'admission 24.3, 24.4, un échangeur thermique 26.3, 26.4, un conduit d'échappement 28.3, 28.4, un ventilateur 30.3, 30.4 ainsi qu'une sortie d'air 32.3, 32.4.

Ce dispositif de refroidissement ne fonctionne pas toujours avec la même capacité de refroidissement. Ainsi, les circuits de refroidissement latéraux 20.1, 20.2 fonctionnent par intermittence, notamment lorsque l'aéronef est au sol. Pour limiter les perturbations aérodynamiques, chaque entrée ou sortie d'air 22.1 à 22.3, 32.1 à 32.4 comprend un volet 34 configuré pour occuper une position ouverte dans laquelle il laisse passer l'air ainsi qu'une position fermée dans laquelle il empêche l'air de passer et se positionne dans le prolongement de la paroi de la nacelle 18. Pour chaque volet 34, le dispositif de refroidissement 20 comprend un actionneur 36 configuré pour déplacer le volet 34 de la position ouverte vers la position fermée et inversement ainsi qu'une commande 38 commune à tous les volets 34 configurée pour piloter les actionneurs 36 et contrôler la position ouverte ou fermée de chaque volet 34. Cette commande 38 permet de synchroniser les mouvements des volets 34 positionnés au niveau des entrée et sortie d'air de chaque circuit de refroidissement.

Selon le mode de réalisation illustré sur la figure 3, chaque ensemble propulseur électrique 14 comprend sept volets 34 et donc sept actionneurs 36.

Ce nombre d'actionneurs 36 conduit à augmenter la masse embarquée de l'aéronef et à impacter sa consommation énergétique.

Le document US2021036580 décrit un dispositif de refroidissement d'un ensemble propulseur comportant un circuit de refroidissement qui présente une entrée d'air pourvue d'un volet d'admission mobile entre des positions ouverte et fermée ainsi qu'une sortie d'air. L'absence d'un volet d'échappement mobile entre des positions ouverte et fermée au niveau de la sortie d'air impacte les performances aérodynamiques de l'aéronef.

La présente invention vise à remédier à tout ou partie des inconvénients de l'art antérieur. A cet effet, l'invention a pour objet un dispositif de refroidissement d'un ensemble propulseur d'aéronef comprenant :
- au moins un circuit de refroidissement qui présente au moins une entrée d'air et au moins une sortie d'air,
- au moins un volet d'admission mobile entre une position ouverte dans laquelle le volet d'admission dégage au moins partiellement l'entrée d'air et une position fermée dans laquelle le volet d'admission obture l'entrée d'air,
- au moins un volet d'échappement mobile entre une position ouverte dans laquelle le volet d'échappement dégage au moins partiellement la sortie d'air et une position fermée dans laquelle le volet d'échappement obture la sortie d'air.

Selon l'invention, le dispositif de refroidissement comprend au moins un actionneur accouplé par au moins une chaîne cinématique au couple de volets d'admission et d'échappement de manière à ce que lesdits volets d'admission et d'échappement soient animés de mouvements synchronisés et occupent simultanément la position fermée ou la position ouverte.

Le fait d'accoupler les volets d'admission et d'échappement des entrée et sortie d'air d'un même circuit de refroidissement à un même actionneur permet de réduire le nombre d'actionneurs et la masse embarquée de l'aéronef.

Selon une autre caractéristique, le dispositif de refroidissement comprend une liaison glissière configurée pour relier le volet d'admission à une structure de l'ensemble propulseur et permettre au volet d'admission de se translater selon une direction de translation.

Selon une autre caractéristique, le dispositif de refroidissement comprend une liaison pivotante configurée pour relier le volet d'échappement à une structure de l'ensemble propulseur et permettre au volet d'échappement de pivoter autour d'un axe de pivotement. Selon une autre caractéristique, la direction de translation et l'axe de pivotement sont perpendiculaires.

Selon une autre caractéristique, le dispositif de refroidissement comprend plusieurs circuits de refroidissement présentant chacun au moins une entrée d'air et au moins une sortie d'air ainsi qu'au moins un volet d'échappement configuré pour obturer simultanément en position fermée deux sorties d'air de deux circuits de refroidissement.

Selon une autre caractéristique, le dispositif de refroidissement comprend plusieurs circuits de refroidissement présentant chacun au moins une entrée d'air et au moins une sortie d'air, plusieurs couples de volets d'admission et d'échappement ainsi qu'un actionneur accouplé à plusieurs couples de volets d'admission et d'échappement.

Selon un premier mode de réalisation, le dispositif de refroidissement comprend des circuits de refroidissement principaux comportant une seule entrée d'air principale équipée d'un volet d'admission principal et une seule sortie d'air principale équipée d'un volet d'échappement principal ainsi que deux circuits de refroidissement secondaires droit et gauche comportant chacun une entrée d'air secondaire droite ou gauche équipée d'un volet d'admission secondaire droit ou gauche et une sortie d'air secondaire droite ou gauche équipée d'un volet d'échappement secondaire droit ou gauche. En complément, le dispositif de refroidissement comprend un premier actionneur accouplé au couple de volets d'admission et d'échappement principaux et contrôlant leurs mouvements, un deuxième actionneur accouplé au couple de volets d'admission et d'échappement secondaires droits et contrôlant leurs mouvements ainsi qu'un troisième actionneur accouplé au couple de volets d'admission et d'échappement secondaires gauches et contrôlant leurs mouvements.

Selon un deuxième mode de réalisation, le dispositif de refroidissement comprend des circuits de refroidissement principaux comportant une seule entrée d'air principale équipée d'un volet d'admission principal et une seule sortie d'air principale équipée d'un volet d'échappement principal ainsi que deux circuits de refroidissement secondaires droit et gauche comportant chacun une entrée d'air secondaire droite ou gauche équipée d'un volet d'admission secondaire droit ou gauche et une sortie d'air secondaire droite ou gauche équipée d'un volet d'échappement secondaire droit ou gauche. En complément, le dispositif de refroidissement comprend un premier actionneur accouplé au volet d'admission principal et contrôlant ses mouvements, un deuxième actionneur accouplé au volet d'échappement principal et contrôlant ses mouvements, un troisième actionneur accouplé au couple de volets d'admission et d'échappement secondaires droits et contrôlant leurs mouvements ainsi qu'un quatrième actionneur accouplé au couple de volets d'admission et d'échappement secondaires gauches et contrôlant leurs mouvements.

Selon un troisième mode de réalisation, le dispositif de refroidissement comprend des circuits de refroidissement principaux comportant une seule entrée d'air principale équipée d'un volet d'admission principal et une seule sortie d'air principale équipée d'un volet d'échappement principal ainsi que deux circuits de refroidissement secondaires droit et gauche comportant chacun une entrée d'air secondaire droite ou gauche équipée d'un volet d'admission secondaire droit ou gauche et une sortie d'air secondaire droite ou gauche, un unique volet d'échappement secondaire étant prévu pour obturer simultanément en position fermée les sorties d'air secondaires droite et gauche. En complément, le dispositif de refroidissement comprend un premier actionneur accouplé au couple de volets d'admission et d'échappement principaux et contrôlant leurs mouvements, un deuxième actionneur accouplé au volet d'admission secondaire droit et contrôlant ses mouvements, un troisième actionneur accouplé au volet d'admission secondaire gauche et contrôlant ses mouvements ainsi qu'un quatrième actionneur accouplé au volet d'échappement secondaire et contrôlant ses mouvements.

Selon un quatrième mode de réalisation, le dispositif de refroidissement comprend des circuits de refroidissement principaux comportant une seule entrée d'air principale équipée d'un volet d'admission principal et une seule sortie d'air principale équipée d'un volet d'échappement principal ainsi que deux circuits de refroidissement secondaires droit et gauche comportant chacun une entrée d'air secondaire droite ou gauche équipée d'un volet d'admission secondaire droit ou gauche et une sortie d'air secondaire droite ou gauche, un unique volet d'échappement secondaire étant prévu pour obturer simultanément en position fermée les sorties d'air secondaires droite et gauche. En complément, le dispositif de refroidissement comprend un premier actionneur accouplé au couple de volets d'admission et d'échappement principaux et contrôlant leurs mouvements ainsi qu'un deuxième actionneur accouplé aux volets d'admission secondaires droit et gauche comme au volet d'échappement secondaire et contrôlant leurs mouvements.

Selon une autre caractéristique, le dispositif de refroidissement comprend une commande configurée pour commander les actionneurs et contrôler les mouvements des différents volets d'admission et d'échappement.

L'invention a également pour objet un ensemble propulseur d'aéronef comprenant au moins un dispositif de refroidissement selon l'une des caractéristiques précédentes.

Enfin, l'invention a également pour objet un aéronef comprenant des ensembles propulseurs comportant chacun au moins un dispositif de refroidissement selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef,
- La figure 2 est une vue latérale d'un ensemble propulseur électrique d'aéronef illustrant un mode de réalisation,
- La figure 3 est une représentation schématique d'un dispositif de refroidissement d'un ensemble propulseur électrique d'aéronef illustrant un mode de réalisation de l'art antérieur,
- La figure 4 est une vue latérale d'une partie d'un ensemble propulseur d'aéronef illustrant un mode de réalisation de l'invention,
- La figure 5 est une représentation schématique d'un couple de volets d'admission et d'échappement, en partie supérieure en position fermée et en partie inférieure en position ouverte, illustrant un mode de réalisation de l'invention,
- La figure 6 est une représentation schématique d'une partie d'un ensemble propulseur d'aéronef illustrant un mode de réalisation de l'invention,
- La figure 7 est une représentation schématique des volets d'échappement d'un dispositif de refroidissement d'un ensemble propulseur d'aéronef illustrant une première configuration de l'invention,
- La figure 8 est une représentation schématique des volets d'échappement d'un dispositif de refroidissement d'un ensemble propulseur d'aéronef illustrant une deuxième configuration de l'invention,
- La figure 9 est une représentation schématique des volets d'échappement d'un dispositif de refroidissement d'un ensemble propulseur d'aéronef illustrant une troisième configuration de l'invention,
- La figure 10 est une représentation schématique d'un dispositif de refroidissement d'un ensemble propulseur d'aéronef illustrant un premier mode de réalisation de l'invention,
- La figure 11 est une représentation schématique d'un dispositif de refroidissement d'un ensemble propulseur d'aéronef illustrant un deuxième mode de réalisation de l'invention,
- La figure 12 est une représentation schématique d'un dispositif de refroidissement d'un ensemble propulseur d'aéronef illustrant un troisième mode de réalisation de l'invention, et
- La figure 13 est une représentation schématique d'un dispositif de refroidissement d'un ensemble propulseur d'aéronef illustrant un troisième mode de réalisation de l'invention.

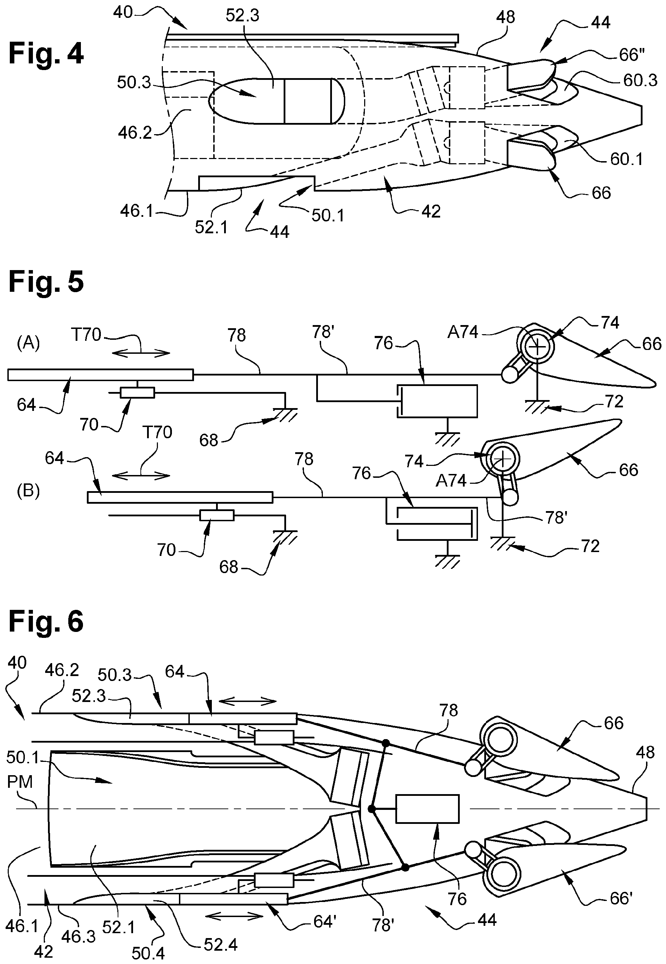

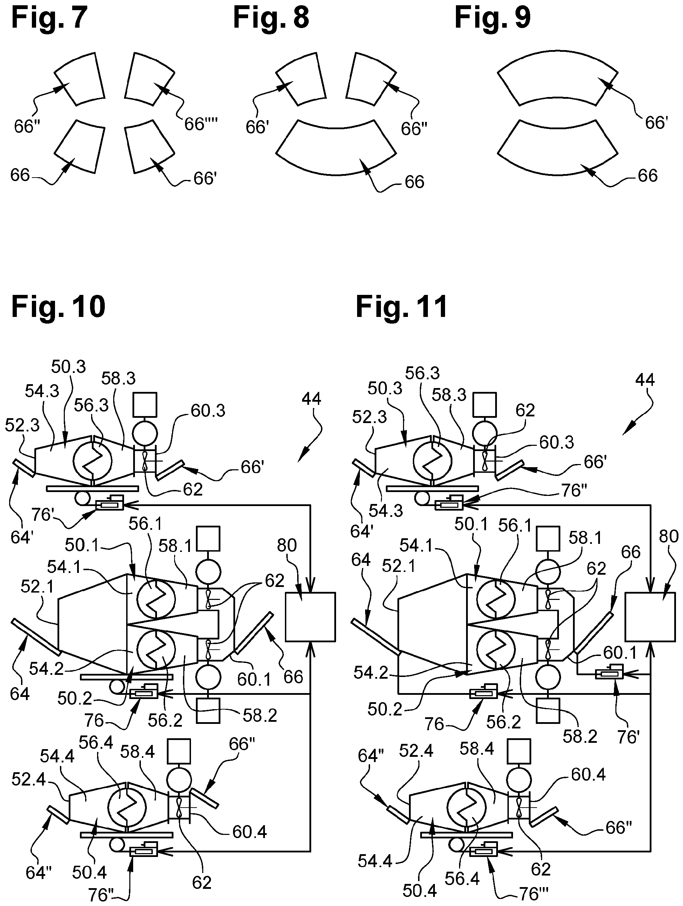

Comme illustré sur la figure 6, un ensemble propulseur 40 d'un aéronef présente un plan médian vertical PM. Cet ensemble propulseur 40 peut être de type électrique et comprendre un ensemble de piles à combustible. Il comprend un carénage 42 ainsi qu'au moins un dispositif de refroidissement 44 dont plusieurs modes de réalisation sont représentés sur les figures 10 à 13.

Selon une configuration, le carénage 42 comprend une partie centrale qui présente une face inférieure 46.1 et deux faces latérales droite et gauche 46.2, 46.3 ainsi qu'une pointe arrière 48 approximativement conique qui prolonge la partie centrale.

Ce dispositif de refroidissement 44 comprend deux circuits de refroidissement principaux 50.1, 50.2 positionnés en partie inférieure de l'ensemble propulseur 40 (approximativement à 6h) de manière symétrique par rapport au plan médian vertical PM ainsi que deux circuits de refroidissement secondaires 50.3, 50.4 positionnés à proximité des faces latérales 46.2, 46.3 (approximativement à 3h et 9h) de manière symétrique par rapport au plan médian vertical PM.

Chaque circuit de refroidissement principal ou secondaire 50.1 à 50.4 est configuré pour canaliser de l'air et comprend, dans le sens d'écoulement de l'air, au moins une entrée d'air 52.1, 52.3 et 52.4 configurée pour prélever l'air à l'extérieur du carénage 42, au moins un conduit d'admission 54.1 à 54.4, au moins un échangeur thermique 56.1 à 56.4, au moins un conduit d'échappement 58.1 à 58.4 ainsi qu'au moins une sortie d'air 60.1, 60.3 et 60.4 configurée pour refouler l'air à l'extérieur du carénage 42. Selon une configuration, au moins un des circuits de refroidissement 50.1 à 50.4 comprend un ventilateur 62 positionné dans le conduit d'échappement 58.1 à 58.4.

Selon un agencement, les circuits de refroidissement principaux 50.1, 50.2 comprennent une unique entrée d'air principale 52.1, commune aux deux circuits de refroidissement principaux 50.1, 50.2, qui alimente un premier tronçon d'admission commun qui se divise en deux conduits d'admission 54.1, 54.2. Cette entrée d'air principale 52.1 débouche au niveau de la face inférieure 46.1 du carénage 42, approximativement à 6h. Elle est symétrique par rapport au plan médian vertical PM. Selon un mode de réalisation, l'entrée d'air principale 52.1 des circuits de refroidissement principaux 50.1, 50.2 est de type affleurant.

Bien entendu, l'invention n'est pas limitée à cet agencement. Les entrées d'air des circuits de refroidissement principaux 50.1, 50.2 pourraient être distinctes.

Selon un agencement, les circuits de refroidissement principaux 50.1, 50.2 comprennent une unique sortie d'air principale 60.1, commune aux deux circuits de refroidissement principaux 50.1, 50.2, alimentée par les deux conduits d'échappement 58.1, 58.2. Cette sortie d'air principale 60.1 débouche en partie inférieure de la pointe arrière 48 du carénage 42, approximativement à 6h. Elle est symétrique par rapport au plan médian vertical PM.

Bien entendu, l'invention n'est pas limitée à cet agencement. Les sorties d'air des circuits de refroidissement principaux 50.1, 50.2 pourraient être distinctes et positionnées respectivement dans le quart inférieur droit et le quart inférieur gauche de la pointe arrière 48 du carénage 42.

Selon un agencement, les entrées d'air secondaires 52.3 et 52.4 des circuits de refroidissement secondaires 50.3, 50.4 sont positionnées respectivement sur les faces latérales droite et gauche 46.2, 46.3 du carénage 42. Les sorties d'air secondaires 60.3, 60.4 des circuits de refroidissement secondaires 50.3, 50.4 sont distinctes et positionnées respectivement dans le quart supérieur droit et le quart supérieur gauche de la pointe arrière 48 du carénage 42.

Bien entendu, l'invention n'est pas limitée à cet agencement. Ainsi, les circuits de refroidissement secondaires 50.3 et 50.4 pourraient avoir une unique sortie d'air.

Pour limiter les perturbations aérodynamiques, au moins une entrée d'air 52.1, 52.3, 52.4 comprend un volet d'admission 64 mobile entre une position ouverte dans laquelle le volet d'admission 64 dégage au moins partiellement l'entrée d'air 52.1, 52.3, 52.4 et permet à l'air de pénétrer dans le conduit d'admission 54.1 à 54.4 ainsi qu'une position fermée dans laquelle le volet d'admission 64 obture l'entrée d'air 52.1, 52.3, 52.4 et empêche l'air de pénétrer dans le conduit d'admission 54.1 à 54.4. Selon une configuration, le volet d'admission 64 est configuré pour être affleurant au carénage 42 en position fermée.

Selon une configuration, chaque entrée d'air 52.1, 52.3, 52.4 est équipée d'un volet d'admission 64 mobile entre des positions ouverte et fermée.

En complément, au moins une sortie d'air 60.1, 60.3, 60.4 comprend un volet d'échappement 66 mobile entre une position ouverte dans laquelle le volet d'échappement 66 dégage au moins partiellement la sortie d'air 60.1, 60.3, 60.4 et permet à l'air de sortir du conduit d'échappement 58.1 à 58.4 ainsi qu'une position fermée dans laquelle le volet d'échappement 66 obture la sortie d'air 60.1, 60.3, 60.4 et empêche l'air de sortir du conduit d'échappement 58.1 à 58.4. Selon une configuration, le volet d'échappement 66 est configuré pour être affleurant au carénage 42 en position fermée.

Par position ouverte, on entend une position totalement ouverte ou partiellement ouverte et, dans tous les cas, une position différente de la position fermée.

Selon une configuration visible sur la figure 7, le dispositif de refroidissement 44 comprend quatre sorties d'air, une pour chaque circuit de refroidissement 50.1, 50.4, et quatre volets d'échappement 66, 66', 66", 66"", un pour chaque sortie d'air.

Selon une autre configuration visible sur la figure 8, le dispositif de refroidissement 44 comprend une seule sortie d'air principale 60.1 pour les deux circuits de refroidissement principaux 50.1, 50.2 ; un volet d'échappement principal 66 pour cette sortie d'air principale 60.1 ; deux sorties d'air secondaires 60.3, 60.4, une pour chaque circuit de refroidissement secondaire 50.3, 50.4 ; ainsi que deux volets d'échappement secondaires 66', 66", un pour chaque sortie d'air secondaire 60.3, 60.4. Selon ce mode de réalisation, le dispositif de refroidissement 44 comprend trois volets d'échappement 66, 66', 66".

Selon une autre configuration, le dispositif comprend deux sorties d'air principales, deux sorties d'air secondaires, un volet d'échappement principal 66 configuré pour obturer simultanément les deux sorties d'air principales en position fermée ainsi que deux volets d'échappement secondaires 66', 66", un pour chaque sortie d'air secondaire. Selon ce mode de réalisation, le dispositif de refroidissement 44 comprend trois volets d'échappement 66, 66', 66".

Selon une autre configuration visible sur la figure 9, le dispositif de refroidissement 44 comprend une seule sortie d'air principale pour les deux circuits de refroidissement principaux 50.1, 50.2, un volet d'échappement principal 66 pour cette sortie d'air principale, une seule sortie d'air secondaire pour les deux circuits de refroidissement secondaires 50.3, 50.4 ainsi qu'un volet d'échappement secondaire 66' pour cette sortie d'air secondaire. Selon ce mode de réalisation, le dispositif de refroidissement 44 comprend deux volets d'échappement 66, 66'.

Selon une autre configuration, le dispositif comprend deux sorties d'air principales, deux sorties d'air secondaires, un volet d'échappement principal 66 configuré pour obturer simultanément les deux sorties d'air principales en position fermée ainsi qu'un volet d'échappement secondaire 66' configuré pour obturer simultanément les deux sorties d'air secondaires en position fermée. Selon ce mode de réalisation, le dispositif de refroidissement 44 comprend deux volets d'échappement 66, 66'.

Ainsi, un volet d'échappement 66, 66' peut être configuré pour obturer simultanément en position fermée deux sorties d'air de deux circuits de refroidissement.

Quel que soit le mode de réalisation, le dispositif de refroidissement 44 comprend :
- au moins un circuit de refroidissement 50.1 à 50.4 qui présente au moins une entrée d'air 52.1, 52.3, 52.4 et au moins une sortie d'air 60.1, 60.3, 60.4,
- au moins un volet d'admission 64 configuré pour obturer, en position fermée, au moins l'entrée d'air du circuit de refroidissement,
- au moins un volet d'échappement 66 configuré pour obturer, en position fermée, au moins la sortie d'air du circuit de refroidissement.

Les volets d'admission et d'échappement 64, 66 d'un même circuit de refroidissement présentent des mouvements synchronisés et occupent simultanément la position fermée, comme illustré sur la partie A de la figure 5, ou une position ouverte, comme illustré sur la partie B de la figure 5.

Selon un mode de réalisation visible sur la figure 5, le volet d'admission 64 est relié à une structure 68 de l'ensemble propulseur 40 par une liaison glissière 70. Ainsi, le volet d'admission 64 est animé d'un mouvement de translation selon une direction de translation T70 pour passer de la position fermée à une position ouverte ou inversement.

Selon un mode de réalisation visible sur la figure 5, le volet d'échappement 66 est relié à une structure 72 de l'ensemble propulseur 40 par une liaison pivotante 74. Ainsi, le volet d'échappement 66 est animé d'un mouvement de pivotement autour d'un axe de pivotement A74 pour passer de la position fermée à une position ouverte ou inversement.

Selon une configuration, les structures 68, 72 peuvent former une unique et même structure. Selon un agencement, la direction de translation T70 et l'axe de pivotement A74 sont perpendiculaires.

Selon un mode de réalisation, le dispositif de refroidissement 44 comprend au moins un actionneur 76, une première chaîne cinématique 78 reliant l'actionneur 76 et le volet d'admission 64 ainsi qu'une deuxième chaîne cinématique 78' reliant l'actionneur 76 et le volet d'échappement 66, les première et deuxième chaînes cinématiques 78, 78' étant configurées pour que les mouvements des volets d'admission et d'échappement 64, 66 soient synchronisés de sorte que lesdits volets d'admission et d'échappement 64, 66 occupent simultanément la position fermée, comme illustré sur la partie A de la figure 5, ou une position ouverte, comme illustré sur la partie B de la figure 5.

Les première et deuxième chaînes cinématiques 78, 78' peuvent être distinctes, ne former qu'une même et unique chaîne cinématique ou avoir des parties communes.

Selon une configuration, l'actionneur 76 peut être un vérin pneumatique, hydraulique, électrique ou tout autre actionneur mécanique linéaire ou rotatif.

Selon un mode de réalisation, chaque chaîne cinématique 78', 78 comprend au moins une biellette convertissant le mouvement linéaire ou rotatif de l'actionneur 76 en un mouvement de translation pour le volet d'admission 64 et en un mouvement de rotation pour le volet d'échappement 66.

Selon un mode de réalisation visible sur la figure 5, un actionneur 76 est accouplé par au moins une chaîne cinématique 78, 78' à un seul couple de volets d'admission et d'échappement 64, 66.

Selon un mode de réalisation visible sur la figure 6, un actionneur 76 est accouplé par au moins une chaîne cinématique 78, 78' à plusieurs couples de volets d'admission et d'échappement 64, 66, 64', 66'.

Le dispositif de refroidissement 44 comprend une commande 80 configurée pour commander les différents actionneurs 76 et contrôler les mouvements des différents volets d'admission et d'échappement 64, 66.

Selon un mode de réalisation visible sur la figure 10, les circuits de refroidissement principaux 50.1, 50.2 comprennent une seule entrée d'air principale 52.1 équipée d'un volet d'admission principal 64 et une seule sortie d'air principale 60.1 équipée d'un volet d'échappement principal 66. Chaque circuit de refroidissement secondaire 50.3, 50.4 comprend une entrée d'air secondaire droite ou gauche 52.3, 52.4 équipée d'un volet d'admission secondaire droit ou gauche 64', 64" et une sortie d'air secondaire droite ou gauche 60.3, 60.4 équipée d'un volet d'échappement secondaire droit ou gauche 66', 66".

Selon ce mode de réalisation, le dispositif de refroidissement 44 comprend :
- un premier actionneur 76 accouplé au couple de volets d'admission et d'échappement principaux 64, 66 et contrôlant leurs mouvements,
- un deuxième actionneur 76' accouplé au couple de volets d'admission et d'échappement secondaires droits 64', 66' et contrôlant leurs mouvements,
- un troisième actionneur 76" accouplé au couple de volets d'admission et d'échappement secondaires gauches 64", 66" et contrôlant leurs mouvements.

Selon un mode de réalisation visible sur la figure 11, les circuits de refroidissement principaux 50.1, 50.2 comprennent une seule entrée d'air principale 52.1 équipée d'un volet d'admission principal 64 et une seule sortie d'air principale 60.1 équipée d'un volet d'échappement principal 66. Chaque circuit de refroidissement secondaire 50.3, 50.4 comprend une entrée d'air secondaire droite ou gauche 52.3, 52.4 équipée d'un volet d'admission secondaire droit ou gauche 64', 64" et une sortie d'air secondaire droite ou gauche 60.3, 60.4 équipée d'un volet d'échappement secondaire droit ou gauche 66', 66".

Selon ce mode de réalisation, le dispositif de refroidissement 44 comprend :
- un premier actionneur 76 accouplé au volet d'admission principal 64 et contrôlant ses mouvements,
- un deuxième actionneur 76' accouplé au volet d'échappement principal 66 et contrôlant ses mouvements,
- un troisième actionneur 76" accouplé au couple de volets d'admission et d'échappement secondaires droits 64', 66' et contrôlant leurs mouvements,
- un quatrième actionneur 76‴ accouplé au couple de volets d'admission et d'échappement secondaires gauches 64", 66" et contrôlant leurs mouvements.

La commande 80 est configurée pour commander les premier et deuxième actionneurs 76, 76' afin de synchroniser les mouvements des volets d'admission et d'échappement principaux 64, 66.

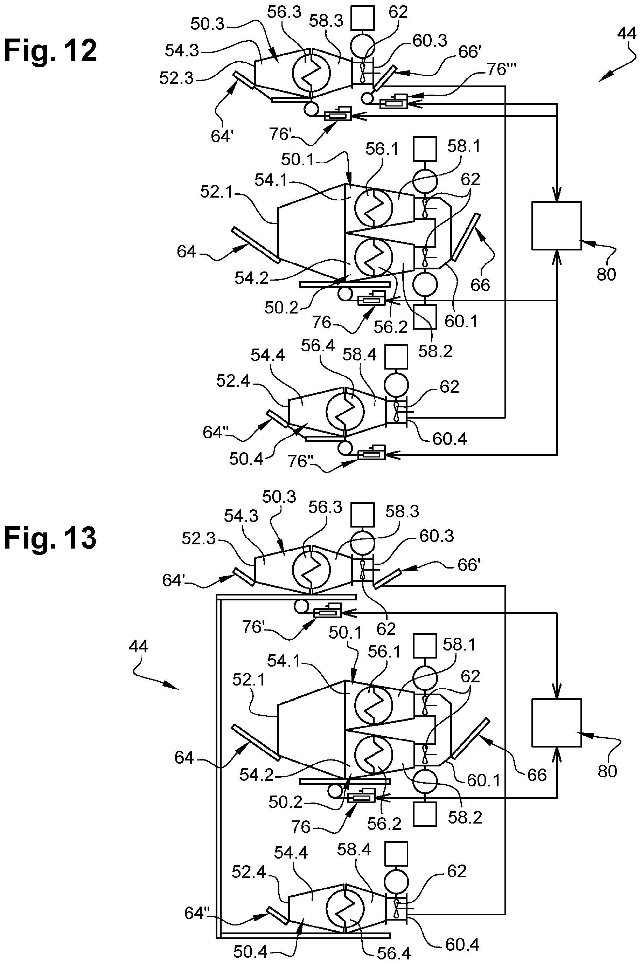

Selon un mode de réalisation visible sur la figure 12, les circuits de refroidissement principaux 50.1, 50.2 comprennent une seule entrée d'air principale 52.1 équipée d'un volet d'admission principal 64 et une seule sortie d'air principale 60.1 équipée d'un volet d'échappement principal 66. Chaque circuit de refroidissement secondaire 50.3, 50.4 comprend une entrée d'air secondaire droite ou gauche 52.3, 52.4 équipée d'un volet d'admission secondaire droit ou gauche 64', 64" et une sortie d'air secondaire droite au gauche 60.3, 60.4. Contrairement aux modes de réalisation visibles sur les figures 10 et 11, le dispositif de refroidissement 44 comprend un unique volet d'échappement secondaire 66' pour ouvrir ou fermer les sorties d'air secondaires droite et gauche 60.3, 60.4 des circuits de refroidissement secondaires 50.3, 50.4.

Selon ce mode de réalisation, le dispositif de refroidissement 44 comprend :
- un premier actionneur 76 accouplé au couple de volets d'admission et d'échappement principaux 64, 66 et contrôlant leurs mouvements,
- un deuxième actionneur 76' accouplé au volet d'admission secondaire droit 64' et contrôlant ses mouvements,
- un troisième actionneur 76" accouplé au volet d'admission secondaire gauche 64" et contrôlant ses mouvements,
- un quatrième actionneur 76‴ accouplé au volet d'échappement secondaire 66' et contrôlant ses mouvements.

La commande 80 est configurée pour commander les deuxième, troisième et quatrième actionneurs 76', 76", 76‴ afin de synchroniser les mouvements des volets d'admission secondaires droit et gauche 64', 64" et du volet d'échappement secondaire 66'.

Selon un mode de réalisation visible sur la figure 13, les circuits de refroidissement principaux 50.1, 50.2 comprennent une seule entrée d'air principale 52.1 équipée d'un volet d'admission principal 64 et une seule sortie d'air principale 60.1 équipée d'un volet d'échappement principal 66. Chaque circuit de refroidissement secondaire 50.3, 50.4 comprend une entrée d'air secondaire droite ou gauche 52.3, 52.4 équipée d'un volet d'admission secondaire droit ou gauche 64', 64" ainsi qu'une sortie d'air secondaire droite et gauche 60.3, 60.4. Comme pour le mode de réalisation visible sur la figure 12, le dispositif de refroidissement 44 comprend un unique volet d'échappement secondaire 66' pour ouvrir ou fermer les sorties d'air secondaires droite et gauche 60.3, 60.4 des circuits de refroidissement secondaires 50.3, 50.4.

Selon ce mode de réalisation, le dispositif de refroidissement 44 comprend :
- un premier actionneur 76 accouplé au couple de volets d'admission et d'échappement principaux 64, 66 et contrôlant leurs mouvements,
- un deuxième actionneur 76' accouplé aux volets d'admission secondaires droit et gauche 64', 64" ainsi qu'au volet d'échappement secondaire 66' et contrôlant leurs mouvements.

Le fait d'accoupler les volets d'admission et d'échappement 64, 66 des entrée et sortie d'air d'un même circuit de refroidissement à un même actionneur permet de réduire le nombre d'actionneurs et la masse embarquée de l'aéronef. Cela permet également d'obtenir une synchronisation automatique des mouvements de ces volets d'admission et d'échappement.

## Revendications

1. Dispositif de refroidissement (44) d'un ensemble propulseur (40) d'aéronef comprenant :
- au moins un circuit de refroidissement (50.1 à 50.4) qui présente au moins une entrée d'air (52.1, 52.3, 52.4) et au moins une sortie d'air (60.1, 60.3, 60.4),
- au moins un volet d'admission (64) mobile entre une position ouverte dans laquelle le volet d'admission (64) dégage au moins partiellement l'entrée d'air (52.1, 52.3, 52.4) et une position fermée dans laquelle le volet d'admission (64) obture l'entrée d'air (52.1, 52.3, 52.4),
- au moins un volet d'échappement (66) mobile entre une position ouverte dans laquelle le volet d'échappement (66) dégage au moins partiellement la sortie d'air (60.1, 60.3, 60.4) et une position fermée dans laquelle le volet d'échappement (66') obture la sortie d'air (60.1, 60.3, 60.4),
le dispositif de refroidissement (44) comprenant au moins un actionneur (76) accouplé par au moins une chaîne cinématique (78, 78') au couple de volets d'admission et d'échappement (64, 66) de manière à ce que lesdits volets d'admission et d'échappement (64, 66) soient animés de mouvements synchronisés et occupent simultanément la position fermée ou la position ouverte.

2. Dispositif de refroidissement selon la revendication 1, **caractérisé en ce que** le dispositif de refroidissement comprend une liaison glissière (70) configurée pour relier le volet d'admission (64) à une structure (68) de l'ensemble propulseur (40) et permettre au volet d'admission (64) de se translater selon une direction de translation (T70).

3. Dispositif de refroidissement selon l'une des revendications précédentes, **caractérisé en ce que** le dispositif de refroidissement comprend une liaison pivotante (74) configurée pour relier le volet d'échappement (66) à une structure (72) de l'ensemble propulseur (40) et permettre au volet d'échappement (66) de pivoter autour d'un axe de pivotement (A74).

4. Dispositif de refroidissement selon les revendications 2 et 3, **caractérisé en ce que** la direction de translation (T70) et l'axe de pivotement (A74) sont perpendiculaires.

5. Dispositif de refroidissement selon l'une des revendications précédentes, ledit dispositif de refroidissement comprenant plusieurs circuits de refroidissement (50.1 à 50.4) présentant chacun au moins une entrée d'air (52.1, 52.3, 52.4) et au moins une sortie d'air (60.1, 60.3, 60.4), **caractérisé en ce que** le dispositif de refroidissement comprend au moins un volet d'échappement (66) configuré pour obturer simultanément en position fermée deux sorties d'air (60.3, 60.4) de deux circuits de refroidissement.

6. Dispositif de refroidissement selon l'une des revendications précédentes, le dispositif de refroidissement comprenant plusieurs circuits de refroidissement (50.1 à 50.4) qui présentent chacun au moins une entrée d'air (52.1, 52.3, 52.4) et au moins une sortie d'air (60.1, 60.3, 60.4) ainsi que plusieurs couples de volets d'admission et d'échappement (64, 64', 66, 66'), **caractérisé en ce que** le dispositif de refroidissement comprend un actionneur (76) accouplé à plusieurs couples de volets d'admission et d'échappement (64, 64', 66, 66').

7. Dispositif de refroidissement selon l'une des revendications 1 à 4, **caractérisé en ce que** le dispositif de refroidissement comprend des circuits de refroidissement principaux (50.1, 50.2) comportant une seule entrée d'air principale (52.1) équipée d'un volet d'admission principal (64) et une seule sortie d'air principale (60.1) équipée d'un volet d'échappement principal (66) ainsi que deux circuits de refroidissement secondaires droit et gauche (50.3, 50.4) comportant chacun une entrée d'air secondaire droite ou gauche (52.3, 52.4) équipée d'un volet d'admission secondaire droit ou gauche (64', 64") et une sortie d'air secondaire droite ou gauche (60.3, 60.4) équipée d'un volet d'échappement secondaire droit ou gauche (66', 66") ; et **en ce que** le dispositif de refroidissement comprend un premier actionneur (76) accouplé au couple de volets d'admission et d'échappement principaux (64, 66) et contrôlant leurs mouvements, un deuxième actionneur (76') accouplé au couple de volets d'admission et d'échappement secondaires droits (64', 66') et contrôlant leurs mouvements ainsi qu'un troisième actionneur (76") accouplé au couple de volets d'admission et d'échappement secondaires gauches (64", 66") et contrôlant leurs mouvements.

8. Dispositif de refroidissement selon l'une des revendications 1 à 4, **caractérisé en ce que** le dispositif de refroidissement comprend des circuits de refroidissement principaux (50.1, 50.2) comportant une seule entrée d'air principale (52.1) équipée d'un volet d'admission principal (64) et une seule sortie d'air principale (60.1) équipée d'un volet d'échappement principal (66) ainsi que deux circuits de refroidissement secondaires droit et gauche (50.3, 50.4) comportant chacun une entrée d'air secondaire droite ou gauche (52.3, 52.4) équipée d'un volet d'admission secondaire droit ou gauche (64', 64") et une sortie d'air secondaire droite ou gauche (60.3, 60.4) équipée d'un volet d'échappement secondaire droit ou gauche (66', 66"), et **en ce que** le dispositif de refroidissement comprend un premier actionneur (76) accouplé au volet d'admission principal (64) et contrôlant ses mouvements, un deuxième actionneur (76') accouplé au volet d'échappement principal (66) et contrôlant ses mouvements, un troisième actionneur (76") accouplé au couple de volets d'admission et d'échappement secondaires droits (64', 66') et contrôlant leurs mouvements ainsi qu'un quatrième actionneur (76‴) accouplé au couple de volets d'admission et d'échappement secondaires gauches (64", 66") et contrôlant leurs mouvements.

9. Dispositif de refroidissement selon l'une des revendications 1 à 4, **caractérisé en ce que** le dispositif de refroidissement comprend des circuits de refroidissement principaux (50.1, 50.2) comportant une seule entrée d'air principale (52.1) équipée d'un volet d'admission principal (64) et une seule sortie d'air principale (60.1) équipée d'un volet d'échappement principal (66) ainsi que deux circuits de refroidissement secondaires droit et gauche (50.3, 50.4) comportant chacun une entrée d'air secondaire droite ou gauche (52.3, 52.4) équipée d'un volet d'admission secondaire droit ou gauche (64', 64") et une sortie d'air secondaire droite ou gauche (60.3, 60.4) ; **en ce que** le dispositif de refroidissement comprend un unique volet d'échappement secondaire (66') configuré pour obturer simultanément en position fermée les sorties d'air secondaires droite et gauche (60.3, 60.4) et **en ce que** le dispositif de refroidissement comprend un premier actionneur (76) accouplé au couple de volets d'admission et d'échappement principaux (64, 66) et contrôlant leurs mouvements, un deuxième actionneur (76') accouplé au volet d'admission secondaire droit (64') et contrôlant ses mouvements, un troisième actionneur (76") accouplé au volet d'admission secondaire gauche (64") et contrôlant ses mouvements ainsi qu'un quatrième actionneur (76‴) accouplé au volet d'échappement secondaire (66') et contrôlant ses mouvements.

10. Dispositif de refroidissement selon l'une des revendications 1 à 4, **caractérisé en ce que** le dispositif de refroidissement comprend des circuits de refroidissement principaux (50.1, 50.2) comportant une seule entrée d'air principale (52.1) équipée d'un volet d'admission principal (64) et une seule sortie d'air principale (60.1) équipée d'un volet d'échappement principal (66) ainsi que deux circuits de refroidissement secondaires droit et gauche (50.3, 50.4) comportant chacun une entrée d'air secondaire droite ou gauche (52.3, 52.4) équipée d'un volet d'admission secondaire droit ou gauche (64', 64") et une sortie d'air secondaire droite ou gauche (60.3, 60.4) ; **en ce que** le dispositif de refroidissement comprend un unique volet d'échappement secondaire (66') configuré pour obturer simultanément en position fermée les sorties d'air secondaires droite et gauche (60.3, 60.4) et **en ce que** le dispositif de refroidissement comprend un premier actionneur (76) accouplé au couple de volets d'admission et d'échappement principaux (64, 66) et contrôlant leurs mouvements ainsi qu'un deuxième actionneur (76') accouplé aux volets d'admission secondaires droit et gauche (64', 64") comme au volet d'échappement secondaire (66') et contrôlant leurs mouvements.

11. Dispositif de refroidissement selon l'une des revendications précédentes, **caractérisé en ce que** le dispositif de refroidissement comprend une commande (80) configurée pour commander les actionneurs (76, 76', 76", 76‴) et contrôler les mouvements des différents volets d'admission et d'échappement (64, 64', 64", 66, 66', 66").

12. Ensemble propulseur d'aéronef comprenant au moins un dispositif de refroidissement selon l'une des revendications précédentes.

13. Aéronef comprenant des ensembles propulseurs comportant chacun au moins un dispositif de refroidissement selon l'une des revendications 1 à 11.

## Patentansprüche

1. Kühlvorrichtung (44) einer Triebwerkseinheit (40) eines Luftfahrzeugs, umfassend:
- wenigstens eine Kühlleitung (50.1 bis 50.4), die wenigstens einen Lufteinlass (52.1, 52.3, 52.4) und wenigstens einen Luftauslass (60.1, 60.3, 60.4) aufweist,
- wenigstens eine Einlassklappe (64), die zwischen einer offenen Position, in der die Einlassklappe (64) den Lufteinlass (52.1, 52.3, 52.4) zumindest teilweise freigibt, und einer geschlossenen Position beweglich ist, in der die Einlassklappe (64) den Lufteinlass (52.1, 52.3, 52.4) verschließt,
- wenigstens eine Auslassklappe (66), die zwischen einer offenen Position, in der die Auslassklappe (66) den Luftauslass (60.1, 60.3, 60.4) zumindest teilweise freigibt, und einer geschlossenen Position beweglich ist, in der die Auslassklappe (66') den Luftauslass (60.1, 60.3, 60.4) verschließt,
wobei die Kühlvorrichtung (44) wenigstens einen Aktuator (76) umfasst, der über wenigstens eine kinematische Kette (78, 78') mit dem Paar aus Einlass- und Auslassklappe (64, 66) gekoppelt ist, so dass die Einlass- und Auslassklappe (64, 66) synchronisierte Bewegungen ausführen und gleichzeitig die geschlossene Position oder die offene Position einnehmen.

2. Kühlvorrichtung nach Anspruch 1, **dadurch gekennzeichnet, dass** die Kühlvorrichtung eine Gleitverbindung (70) umfasst, die so eingerichtet ist, dass sie die Einlassklappe (64) mit einer Struktur (68) der Triebwerkseinheit (40) verbindet und es der Einlassklappe (64) ermöglicht, sich in einer Translationsrichtung (T70) zu verschieben.

3. Kühlvorrichtung nach einem der vorhergehenden Ansprüche, **dadurch gekennzeichnet, dass** die Kühlvorrichtung eine Schwenkverbindung (74) umfasst, die so eingerichtet ist, dass sie die Auslassklappe (66) mit einer Struktur (72) der Triebwerkseinheit (40) verbindet und es der Auslassklappe (66) ermöglicht, um eine Schwenkachse (A74) zu schwenken.

4. Kühlvorrichtung nach den Ansprüchen 2 und 3, **dadurch gekennzeichnet, dass** die Translationsrichtung (T70) und die Schwenkachse (A74) im rechten Winkel zueinander stehen.

5. Kühlvorrichtung nach einem der vorhergehenden Ansprüche, wobei die Kühlvorrichtung mehrere Kühlleitungen (50.1 bis 50.4) umfasst, die jeweils wenigstens einen Lufteinlass (52.1, 52.3, 52.4) und wenigstens einen Luftauslass (60.1, 60.3, 60.4) aufweisen, **dadurch gekennzeichnet, dass** die Kühlvorrichtung wenigstens eine Auslassklappe (66) umfasst, die so eingerichtet ist, dass sie in geschlossener Position gleichzeitig zwei Luftauslässe (60.3, 60.4) von zwei Kühlleitungen verschließt.

6. Kühlvorrichtung nach einem der vorhergehenden Ansprüche, wobei die Kühlvorrichtung mehrere Kühlleitungen (50.1 bis 50.4) umfasst, die jeweils wenigstens einen Lufteinlass (52.1, 52.3, 52.4) und wenigstens einen Luftauslass (60.1, 60.3, 60.4) sowie mehrere Paare aus Einlass- und Auslassklappen (64, 64', 66, 66') aufweisen, **dadurch gekennzeichnet, dass** die Kühlvorrichtung einen Aktuator (76) umfasst, der mit mehreren Paaren aus Einlass- und Auslassklappen (64, 64', 66, 66') gekoppelt ist.

7. Kühlvorrichtung nach einem der Ansprüche 1 bis 4, **dadurch gekennzeichnet, dass** die Kühlvorrichtung Hauptkühlleitungen (50.1, 50.2) mit einem einzelnen Hauptlufteinlass (52.1), der mit einer Haupteinlassklappe (64) ausgestattet ist, und mit einem einzelnen Hauptluftauslass (60.1), der mit einer Hauptauslassklappe (66) ausgestattet ist, sowie zwei rechte und linke Nebenkühlleitungen (50.3, 50.4) aufweist, die jeweils einen rechten oder linken Nebenlufteinlass (52.3, 52.4), der mit einer rechten oder linken Nebeneinlassklappe (64', 64") ausgestattet ist, und einen rechten oder linken Nebenluftauslass (60.3, 60.4), der mit einer rechten oder linken Nebenauslassklappe (66', 66") ausgestattet ist, und dass die Kühlvorrichtung einen ersten Aktuator (76), der mit dem Paar aus Haupteinlass- und -auslassklappe (64, 66) gekoppelt ist und deren Bewegungen steuert, einen zweiten Aktuator (76'), der mit dem Paar aus rechter Nebeneinlass- und -auslassklappe (64', 66') gekoppelt ist und deren Bewegungen steuert, sowie einen dritten Aktuator (76") aufweist, der mit dem Paar aus linker Nebeneinlass- und -auslassklappe (64", 66") gekoppelt ist und deren Bewegungen steuert.

8. Kühlvorrichtung nach einem der Ansprüche 1 bis 4, **dadurch gekennzeichnet, dass** die Kühlvorrichtung Hauptkühlleitungen (50.1, 50.2) mit einem einzelnen Hauptlufteinlass (52.1), der mit einer Haupteinlassklappe (64) ausgestattet ist, und mit einem einzelnen Hauptluftauslass (60.1), der mit einer Hauptauslassklappe (66) ausgestattet ist, sowie zwei rechte und linke Nebenkühlleitungen (50.3, 50.4) aufweist, die jeweils einen rechten oder linken Nebenlufteinlass (52.3, 52.4), der mit einer rechten oder linken Nebeneinlassklappe (64', 64") ausgestattet ist, und einen rechten oder linken Nebenluftauslass (60.3, 60.4) aufweisen, der mit einer rechten oder linken Nebenauslassklappe (66', 66") ausgestattet ist, und dass die Kühlvorrichtung einen ersten Aktuator (76), der mit der Haupteinlassklappe (64) gekoppelt ist und deren Bewegungen steuert, einen zweiten Aktuator (76'), der mit der Hauptauslassklappe (66) gekoppelt ist und deren Bewegungen steuert, einen dritten Aktuator (76"), der mit dem Paar aus rechter Nebeneinlass- und -auslassklappe (64', 66') gekoppelt ist und deren Bewegungen steuert, sowie einen vierten Aktuator (76‴) aufweist, der mit dem Paar aus linker Nebeneinlass- und -auslassklappe (64", 66") gekoppelt ist und deren Bewegungen steuert.

9. Kühlvorrichtung nach einem der Ansprüche 1 bis 4, **dadurch gekennzeichnet, dass** die Kühlvorrichtung Hauptkühlleitungen (50.1, 50.2) mit einem einzelnen Hauptlufteinlass (52.1), der mit einer Haupteinlassklappe (64) ausgestattet ist, und mit einem einzelnen Hauptluftauslass (60.1), der mit einer Hauptauslassklappe (66) ausgestattet ist, sowie zwei rechte und linke Nebenkühlleitungen (50.3, 50.4) aufweist, die jeweils einen rechten oder linken Nebenlufteinlass (52.3, 52.4), der mit einer rechten oder linken Nebeneinlassklappe (64', 64") ausgestattet ist, und einen rechten oder linken Nebenluftauslass (60.3, 60.4) aufweisen, und dass die Kühlvorrichtung eine einzelne Nebenauslassklappe (66') umfasst, die so eingerichtet ist, dass sie in der geschlossenen Position gleichzeitig den rechten und linken Nebenluftauslass (60.3, 60.4) verschließt und dass die Kühlvorrichtung einen ersten Aktuator (76), der mit dem Paar aus Haupteinlass- und -auslassklappe (64, 66) gekoppelt ist und deren Bewegungen steuert, einen zweiten Aktuator (76'), der mit der rechten Nebeneinlassklappe (64') gekoppelt ist und deren Bewegungen steuert, einen dritten Aktuator (76"), der mit der linken Nebeneinlassklappe (64") gekoppelt ist und deren Bewegungen steuert, sowie einen vierten Aktuator (76‴) aufweist, der mit der Nebenauslassklappe (66') gekoppelt ist und deren Bewegungen steuert.

10. Kühlvorrichtung nach einem der Ansprüche 1 bis 4, **dadurch gekennzeichnet, dass** die Kühlvorrichtung Hauptkühlleitungen (50.1, 50.2) mit einem einzelnen Hauptlufteinlass (52.1), der mit einer Haupteinlassklappe (64) ausgestattet ist, und mit einem einzelnen Hauptluftauslass (60.1), der mit einer Hauptauslassklappe (66) ausgestattet ist, sowie zwei rechte und linke Nebenkühlleitungen (50.3, 50.4) aufweist, die jeweils einen rechten oder linken Nebenlufteinlass (52.3, 52.4), der mit einer rechten oder linken Nebeneinlassklappe (64', 64") ausgestattet ist, und einen rechten oder linken Nebenluftauslass (60.3, 60.4) aufweisen, dass die Kühlvorrichtung eine einzelne Nebenauslassklappe (66') aufweist, die so eingerichtet ist, dass sie in der geschlossenen Position gleichzeitig den rechten und linken Nebenluftauslass (60.3, 60.4) verschließt, und dass die Kühlvorrichtung einen ersten Aktuator (76), der mit dem Paar aus Haupteinlass- und auslassklappe (64, 66) gekoppelt ist und deren Bewegungen steuert, sowie einen zweiten Aktuator (76') aufweist, der mit der rechten und linken Nebeneinlassklappe (64', 64") sowie auch mit der Nebenauslassklappe (66') gekoppelt ist und deren Bewegungen steuert.

11. Kühlvorrichtung nach einem der vorhergehenden Ansprüche, **dadurch gekennzeichnet, dass** die Kühlvorrichtung eine Steuerung (80) umfasst, die so eingerichtet ist, dass sie die Aktuatoren (76, 76', 76", 76‴) steuert und die Bewegungen der verschiedenen Einlass- und Auslassklappen (64, 64', 64", 66, 66', 66") überwacht.

12. Triebwerkseinheit eines Luftfahrzeugs mit wenigstens einer Kühlvorrichtung nach einem der vorhergehenden Ansprüche.

13. Luftfahrzeug mit Triebwerkseinheiten, die jeweils wenigstens eine Kühlvorrichtung nach einem der Ansprüche 1 bis 11 aufweisen.

## Claims

1. Device (44) for cooling an aircraft propulsion system (40), comprising:
- at least one cooling circuit (50.1 to 50.4) that has at least one air inlet (52.1, 52.3, 52.4) and at least one air outlet (60.1, 60.3, 60.4),
- at least one intake flap (64) mobile between an open position in which the intake flap (64) uncovers at least partially the air inlet (52.1, 52.3, 52.4) and a closed position in which the intake flap (64) blocks the air inlet (52.1, 52.3, 52.4), and
- at least one exhaust flap (66) mobile between an open position in which the exhaust flap (66) uncovers at least partially the air outlet (60.1, 60.3, 60.4) and a closed position in which the exhaust flap (66') blocks the air outlet (60.1, 60.3, 60.4),
the cooling device (44) comprising at least one actuator (76) coupled by at least one kinematic system (78, 78') to the pair of intake flaps and exhaust flaps (64, 66) in such a manner that said intake and exhaust flaps (64, 66) are driven in synchronised movements and simultaneously occupy the closed position or the open position.

2. Cooling device as claimed in claim 1, **characterised in that** the cooling device comprises a sliding connection (70) configured to connect the intake flap (64) to a structure (68) of the propulsion system (40) and to enable the intake flap (64) to move in translation in a translation direction (T70).

3. Cooling device as claimed in either one of the preceding claims, **characterised in that** the cooling device comprises a pivoting connection (74) configured to connect the exhaust flap (66) to a structure (72) of the propulsion system (40) and to enable the exhaust flap (66) to pivot about a pivot axis (A74).

4. Cooling device as claimed in claims 2 and 3, **characterised in that** the translation direction (T70) and the pivot axis (A74) are perpendicular.

5. Cooling device as claimed in any one of the preceding claims, said cooling device comprising a plurality of cooling circuits (50.1 to 50.4) each having at least one air inlet (52.1, 52.3, 52.4) and at least one air outlet (60.1, 60.3, 60.4), **characterised in that** the cooling device comprises at least one exhaust flap (66) configured to block simultaneously in the closed position two air outlets (60.3, 60.4) of two cooling circuits.

6. Cooling device as claimed in any one of the preceding claims, the cooling device comprising a plurality of cooling circuits (50.1 to 50.4) each having at least one air inlet (52.1, 52.3, 52.4) and at least one air outlet (60.1, 60.3, 60.4) and a plurality of pairs of intake and exhaust flaps (64, 64', 66, 66'), **characterised in that** the cooling device comprises an actuator (76) coupled to a plurality of pairs of intake and exhaust flaps (64, 64', 66, 66').

7. Cooling device as claimed in any one of claims 1 to 4, **characterised in that** the cooling device comprises main cooling circuits (50.1, 50.2) including a single main air inlet (52.1) equipped with a main intake flap (64) and a single main air outlet (60.1) equipped with a main exhaust flap (66) and two, right-hand and left-hand, secondary cooling circuits (50.3, 50.4) each including a right-hand or left-hand secondary air inlet (52.3, 52.4) equipped with a right-hand or left-hand secondary intake flap (64', 64") and a right-hand or left-hand secondary air outlet (60.3, 60.4) equipped with a right-hand or left-hand secondary exhaust (66', 66"), and **in that** the cooling device comprises a first actuator (76) coupled to the pair of main intake and exhaust flaps (64, 66) and controlling the movements thereof, a second actuator (76') coupled to the pair of right-hand secondary intake and exhaust flaps (64', 66') and controlling the movements thereof, and a third actuator (76") coupled to the pair of left-hand secondary intake and exhaust flaps (64", 66") and controlling the movements thereof.

8. Cooling device as claimed in any one of claims 1 to 4, **characterised in that** the cooling device comprises main cooling circuits (50.1, 50.2) including a single main air inlet (52.1) equipped with a main intake flap (64) and a single main air outlet (60.1) equipped with a main exhaust flap (66), and two, right-hand and left-hand, secondary cooling circuits (50.3, 50.4) each including a right-hand or left-hand secondary air inlet (52.3, 52.4) equipped with a right-hand or left-hand secondary intake flap (64', 64") and a right-hand or left-hand secondary air outlet (60.3, 60.4) equipped with a right-hand or left-hand secondary exhaust flap (66', 66"), and **in that** the cooling device comprises a first actuator (76) coupled to the main intake flap (64) and controlling the movements thereof, a second actuator (76') coupled to the main exhaust flap (66) and controlling the movements thereof, a third actuator (76") coupled to the pair of right-hand secondary intake and exhaust flaps (64', 66') and controlling the movements thereof, and a fourth actuator (76‴) coupled to the pair of left-hand secondary intake and exhaust flaps (64", 66") and controlling the movements thereof.

9. Cooling device as claimed in any one of claims 1 to 4, **characterised in that** the cooling device comprises main cooling circuits (50.1, 50.2) including a single main air inlet (52.1) equipped with a main intake flap (64) and a single main air outlet (60.1) equipped with a main exhaust flap (66) and two, right-hand and left-hand, secondary cooling circuits (50.3, 50.4) each including a right-hand or left-hand secondary air inlet (52.3, 52.4) equipped with a right-hand or left-hand secondary intake flap (64', 64") and a right-hand or left-hand secondary air outlet (60.3, 60.4), **in that** the cooling device comprises a single secondary exhaust flap (66') configured to block simultaneously in the closed position the right-hand and left-hand secondary air outlets (60.3, 60.4), and **in that** the cooling device comprises a first actuator (76) coupled to the pair of main intake and exhaust flaps (64, 66) and controlling the movements thereof, a second actuator (76') coupled to the right-hand secondary intake flap (64') and controlling the movements thereof, a third actuator (76") coupled to the left-hand secondary intake flap (64") and controlling the movements thereof, and a fourth actuator (76‴) coupled to the secondary exhaust flap (66') and controlling the movements thereof.

10. Cooling device as claimed in any one of claims 1 to 4, **characterised in that** the cooling device comprises main cooling circuits (50.1, 50.2) including a single main air inlet (52.1) equipped with a main intake flap (64) and a single main air outlet (60.1) equipped with a main exhaust flap (66) and two, right-hand and left-hand, secondary cooling flaps (50.3, 50.4) each including a right-hand or left-hand secondary air inlet (52.3, 52.4) equipped with a right-hand or left-hand secondary intake flap (64', 64") and a right-hand or left-hand secondary air outlet (60.3, 60.4), **in that** the cooling device comprises a single secondary exhaust flap (66') configured to block simultaneously in the closed position the right-hand and left-hand secondary air outlets (60.3, 60.4), and **in that** the cooling device comprises a first actuator (76) coupled to the pair of main intake and exhaust flaps (64, 66) and controlling the movements thereof and a second actuator (76') coupled to the right-hand and left-hand secondary intake flaps (64', 64") as to the secondary exhaust flap (66') and controlling the movements thereof.

11. Cooling device as claimed in any of the preceding claims, **characterised in that** the cooling device comprises a controller (80) configured to control the actuators (76, 76', 76", 76‴) and to monitor the movements of the various intake and exhaust flaps (64, 64', 64", 66, 66', 66").

12. Aircraft propulsion system comprising at least one cooling device as claimed in any one of the preceding claims.

13. Aircraft comprising propulsion systems each including at least one cooling device as claimed in any one of claims 1 to 11.
